(19) Europäisches Patentamt
European Patent Office
Office européen des brevets

(11) **EP 3 729 768 B1**

(12) **FASCICULE DE BREVET EUROPEEN**

(45) Date de publication et mention
de la délivrance du brevet:
**29.04.2026 Bulletin 2026/18**

(21) Numéro de dépôt: **18822101.4**

(22) Date de dépôt: **20.12.2018**

(51) Classification Internationale des Brevets (IPC):
**H04L 9/40** *(2022.01)*        **G06F 17/40** *(2006.01)*
**G06F 21/55** *(2013.01)*        **G06F 21/56** *(2013.01)*

(52) Classification Coopérative des Brevets (CPC):
**H04L 63/1416; G06F 21/55; G06F 21/552;
G06F 21/56; G06F 21/566; H04L 63/1425;**
G06F 17/40

(86) Numéro de dépôt international:
**PCT/EP2018/086400**

(87) Numéro de publication internationale:
**WO 2019/122241 (27.06.2019 Gazette 2019/26)**

(54) **PROCÉDÉ DE CONSTRUCTION AUTOMATIQUE DE SCÉNARIOS D'ATTAQUES INFORMATIQUES, PRODUIT PROGRAMME D'ORDINATEUR ET SYSTÈME DE CONSTRUCTION ASSOCIÉS**

VERFAHREN ZUR AUTOMATISCHEN KONSTRUKTION VON COMPUTERANGRIFFSSZENARIEN, COMPUTERPROGRAMMPRODUKT UND ZUGEHÖRIGES KONSTRUKTIONSSYSTEM

METHOD FOR AUTOMATICALLY CONSTRUCTING COMPUTER ATTACK SCENARIOS, COMPUTER PROGRAM PRODUCT AND ASSOCIATED CONSTRUCTION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2017 FR 1701360**

(43) Date de publication de la demande:
**28.10.2020 Bulletin 2020/44**

(73) Titulaire: **THALES**
**92400 Courbevoie (FR)**

(72) Inventeurs:
• **KHEIR, Nizar**
**91767 Palaiseau Cedex (FR)**
• **BETTAN, Olivier**
**91767 Palaiseau Cedex (FR)**
• **XOSANAVONGSA, Charles**
**91767 Palaiseau Cedex (FR)**

(74) Mandataire: **Lavoix**
**2, place d'Estienne d'Orves**
**75441 Paris Cedex 09 (FR)**

(56) Documents cités:
• **LEITE ADRIANA ET AL: "A hybrid and learning agent architecture for network intrusion detection", JOURNAL OF SYSTEMS & SOFTWARE, ELSEVIER NORTH HOLLAND, NEW YORK, NY, US, vol. 130, 10 February 2017 (2017-02-10), pages 59 - 80, XP085072865, ISSN: 0164-1212, DOI: 10.1016/J.JSS.2017.01.028**
• **MAHEYZAH MD SIRAJ ET AL: "Towards Predictive Real-time Multi-sensors Intrusion Alert Correlation Framework", INDIAN JOURNAL OF SCIENCE & TECHNOLOGY, vol. 8, no. 12, 30 June 2015 (2015-06-30), XP055483993, ISSN: 0974-6846, DOI: 10.17485/ijst/2015/v8i12/70658**

**Description**

La présente invention concerne un procédé de construction automatique de scénarios d'attaques informatiques spécifiques à un environnement cible à protéger.

La présente invention concerne également un produit programme d'ordinateur et un système de construction associés.

Plus particulièrement, la présente invention se situe dans le domaine de la sécurité informatique et concerne notamment la détection d'attaques informatiques dans un système informatique.

Différentes méthodes de détection d'attaques informatiques existent dans l'état de la technique. De manière générale, ces méthodes peuvent être divisées en deux catégories.

Les méthodes de la première catégorie se basent sur la détection de scénarios ou de signatures d'attaque connus.

En particulier, un scénario d'attaque permet de représenter une attaque connue sous la forme d'un enchainement d'étapes qui exprime une connaissance actuelle de l'état de la menace. Un tel scénario permet alors de détecter une attaque ayant le même enchainement d'étapes, sous condition que ces étapes soient exécutées de manière similaire.

Toutefois, la connaissance actuelle de l'état de la menace n'est pas forcément exhaustive. De ce fait, la corrélation d'alertes se basant sur des scenarios d'attaque a toujours été confrontée aux problématiques dites de « zero-day », attaques sans signature connue car exploitant de nouvelles vulnérabilités, et à la grande combinatoire des modes opératoires d'attaquant qui interdisent la création de listes exhaustives.

Les méthodes de la deuxième catégorie sont généralement destinées à pallier les problématiques de « zero-day » et mettent en œuvre des techniques, dites « comportementales ».

En particulier, ces techniques comportementales permettent de mettre en avant des éléments de suspicion de fait de l'observation constante du système informatique et de la dynamique de ses utilisateurs. En revanche, ces éléments de suspicion s'appuient majoritairement, voire exclusivement, sur des éléments statistiques (ex. nombre de connexions vers une adresse, taux de consommation de ressources, latence) qui nécessitent souvent une étape de validation humaine, pouvant sinon amener à un taux excessif de fausses alertes, dites faux positifs.

Compte tenu des inconvénients des méthodes de chacune des catégories précitées, il serait donc intéressant d'obtenir des méthodes « hybrides », c'est-à-dire des méthodes incluant des techniques des deux catégories.

Dans l'état de la technique, différentes techniques d'hybridation des méthodes des deux catégories ont été déjà envisagées.

Ainsi, par exemple, l'une de ces techniques consiste à mettre en parallèle deux modules de supervision mettant en œuvre des méthodes de détection des catégories différentes. Un troisième module d'arbitrage mis en aval des deux modules de supervision décide de la remontée, ou non, d'une alerte de sécurité en fonction des alertes remontées par chacun des modules de supervision, en fonction d'une politique d'alertes définie par l'exploitant.

Une autre technique consiste à mettre en série deux modules de supervision mettant en œuvre des méthodes de détection des catégories différentes. Ainsi, le résultat fourni par l'un des deux modules de supervision permet de confirmer ou d'infirmer le résultat de l'autre.

D'autres techniques d'hybridation sont par exemple connues des documents : LEITE ADRIANA ET AL : "A hybrid and learning agent architecture for network intrusion detection", JOURNAL OF SYSTEMS & SOFTWARE, ELSEVIER NORTH HOLLAND, NEW YORK, NY, US, et MAHEYZAH MD SIRAJ ET AL: Toward Predictive Real-time Multi-sensors Intrusion Alert Correlation Framework" INDIAN JOURNAL OF SCIENCE & TECHNOLOGY, vol.8, no.12, 30 juin 2015 (2015-06-30).

On conçoit alors que l'usage de l'une des deux options précitées nécessite l'implémentation séparée, en mode « boite noire », de chacun des modules de supervision, sans créer d'une hybridation complexe qui pourrait s'avérer plus efficace.

La présente invention a pour but de proposer une technique de création de méthodes de détection d'attaques informatiques avec une hybridation complexe permettant ainsi de résoudre efficacement les problématiques de « zero-day » spécifiques aux méthodes de détection de la première catégorie tout en diminuant le nombre de fausses alertes spécifiques aux méthodes de la deuxième catégorie.

À cet effet, l'invention a pour objet un procédé de construction automatique de scénarios d'attaques informatiques selon la revendication 1.

Suivant d'autres aspects avantageux de l'invention, le procédé est selon l'une quelconque des revendications 2 à 7.

L'invention a également pour objet un produit programme d'ordinateur selon la revendication 8.

L'invention a également pour objet un système de construction automatique de scénarios d'attaques informatiques selon la revendication 9.

Ces caractéristiques et avantages de l'invention apparaitront à la lecture de la description qui va suivre, donnée uniquement à titre d'exemple non limitatif, et faite en référence aux dessins annexés, sur lesquels :

- la figure 1 est une vue schématique d'un système de construction selon l'invention ;
- la figure 2 est une illustration schématique d'un scénario générique utilisé pour le fonctionnement du système de construction de la figure 1 ; et
- la figure 3 est un organigramme d'un procédé de construction selon l'invention, le procédé étant mis en œuvre par le système de la figure 1.

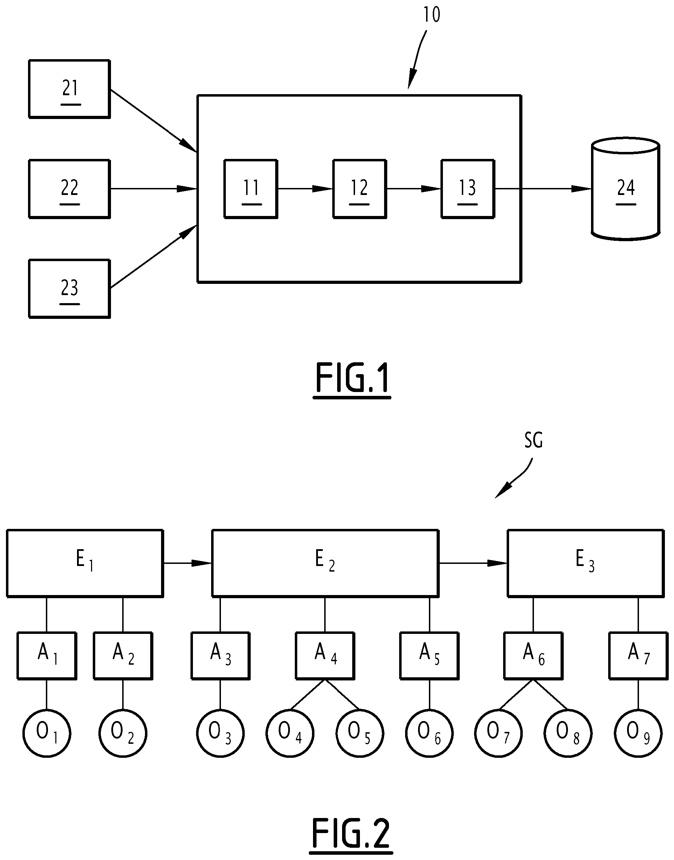

Le système de construction 10 de la figure 1 permet de construire automatiquement des scénarios d'attaques informatiques spécifiques à un environnement cible à protéger.

Par environnement à protéger, on comprend tout environnement informatique tel qu'un réseau informatique ou un système informatique plus complexe composé par exemple de plusieurs réseaux informatiques, qui doit être protégé contre des attaques informatiques.

Dans l'exemple décrit, l'environnement cible comprend des outils de journalisations d'événements survenant dans cet environnement et un système de détection d'intrusions par exemple de type IDS (de l'anglais « Intrusion Detection System »). Ce système de détection d'intrusions permet notamment de détecter une attaque informatique élémentaire et de lever une alerte correspondante.

En particulier, une attaque informatique élémentaire est détectée par ce système lorsqu'un ou plusieurs évènements survenus dans l'environnement correspondent à une signature de cette attaque. La signature d'une attaque informatique est issue d'une base de signatures prévue à cet effet dans l'environnement cible.

En référence à la figure 1, le système de construction 10 comprend un module d'acquisition 11, un module de traitement 12 et un module de sortie 13.

Le système de construction 10 fait partie de l'environnement cible ou se situe à l'extérieur de celui-ci. Dans ce dernier cas, le système de construction 10 fait partie par exemple d'un centre externe SOC (de l'anglais « Security Operation Center »).

Le système de construction 10 se présente par exemple sous la forme d'un calculateur. Dans ce cas, chacun des modules 11, 12, 13 précités se présente au moins partiellement sous la forme d'un logiciel exécutable par un processeur et stocké dans une mémoire de ce calculateur. En variante ou en complément, chacun des modules 11, 12, 13 précités se présente au moins partiellement sous la forme d'un dispositif physique, tel que par exemple un circuit programmable.

Selon un autre exemple de réalisation, le système de construction 10 se présente sous la forme plus complexe, composée par exemple de plusieurs calculateurs ou clusters de type « Big Data » distincts et raccordés éventuellement par un réseau informatique. Dans ce cas, chacun des modules 11, 12, 13 précités se présente sous la forme d'un logiciel et/ou d'un dispositif physique tel que décrit précédemment.

Le module d'acquisition 11 est raccordé à trois bases de données, à savoir une première unité opérationnelle 21, une deuxième unité opérationnelle 22 et une troisième unité opérationnelle 23.

Le module d'acquisition 11 est apte à acquérir des données issues de ces bases 21, 22 et 23 et à les transmettre au module de traitement 12.

Le module de traitement 12 est apte à traiter les données reçues pour générer au moins une donnée résultante, comme cela sera expliqué par la suite.

Le module de sortie 13 est apte à acquérir chaque donnée résultante générée par le module de traitement 12 et à générer à partir de cette donnée une donnée de sortie.

Le module de sortie 13 est apte en outre à transmettre chaque donnée de sortie générée à une base de données 24.

Selon un exemple de réalisation, le module de sortie 13 est raccordé à une interface d'interaction homme-machine permettant par exemple d'afficher à un utilisateur chaque donnée de sortie sous une forme appropriée.

Chacune des unités opérationnelles 21, 22 et 23 se présente sous la forme d'un dispositif informatique connu en soi qui est apte à fournir des données informatiques détaillées par la suite. Ainsi, par exemple, chacune des unités opérationnelles 21, 22 et 23 correspond à un réseau informatique, un dispositif de stockage, un tampon d'échange de données informatiques, un socket, etc...

La première unité opérationnelle 21 est apte à fournir un premier ensemble de données comprenant une pluralité de scénarios génériques.

Chaque scénario générique correspond à une attaque informatique connue et représente alors une description de déroulement conceptuel de cette attaque dans un cas générique, c'est-à-dire indépendamment de l'environnement cible.

Chaque scénario générique se présente sous la forme d'une donnée informatique d'une structure connue en soi.

Ainsi, selon un exemple de réalisation, la donnée informatique présentant un scénario générique est conforme au standard STIX (de l'anglais « Structured Threat Information expression »).

Chaque scénario générique SG comprend une pluralité d'étapes $E_i$ et pour chaque étape $E_i$, une ou plusieurs actions $A_j$, chaque action $A_j$ étant caractérisée par une ou plusieurs variables observables $O_k$.

Les étapes $E_i$ permettent de définir l'ordre dans lequel différents groupes d'actions $A_j$ sont exécutés lors de l'attaque correspondante. Les étapes $E_i$ sont donc génériques et ne dépendent pas de l'environnement cible dans lequel l'attaque est exercée.

Chaque action $A_j$ correspond à une attaque informatique élémentaire réalisée lors de l'étape $E_j$ correspondante. Par attaque élémentaire, on entend un pas élémentaire exercé par l'attaquant pour parvenir au but final de l'attaque informatique.

Ainsi, par exemple, une étape générique $E_i$ pourrait correspondre à la description suivante : « l'attaquant prend la main sur une machine distante ». Dans ce cas, les actions $A_j$ réalisées lors de cette étape $E_i$ pourrait consister en :

(1) « l'attaquant exploite une faille qui lui permet d'exporter du code malveillant sur la machine » ;
(2) « le code malveillant, une fois exécuté, exploite une autre faille qui lui permet de réaliser une élévation de privilèges » ; et
(3) « l'attaquant, ayant maintenant les privilèges administrateur, prend la main sur la machine distante ».

Chaque variable observable $O_k$ correspond à toute donnée informatique concrète utilisée pour mettre en oeuvre l'attaque informatique et représente ainsi une trace permettant la détection de cette attaque.

Chaque variable observable $O_k$ est apte à prendre différentes valeurs en fonction de l'environnement cible dans lequel l'attaque est réalisée. Ainsi, dans le cadre du scénario générique, les variables observables $O_k$ ne sont pas associées à des valeurs observables.

Avantageusement, chaque variable observable $O_k$ est associée à un type prédéterminé qui définit la nature de cette variable et donc les valeurs observables qui peuvent être associées à cette variable.

Ainsi, par exemple, il est possible d'avoir une variable de type « source_address » indiquant que cette variable correspond à l'adresse de la source à partir de laquelle une requête utilisée lors de l'attaque, a été envoyée. Cette variable peut donc être associée à la valeur « 10.0.0.1 » correspondant à une adresse IP.

De préférence, les variables observables $O_k$ d'un même scénario générique SG sont ordonnancées selon un ordre prédéterminé. Dans ce cas, l'indice k associée à la référence $O_k$ varie de 1 à n où n désigne le nombre total des variables observables dans le scénario générique SG donné.

Bien entendu, des indices de nature plus complexe ainsi que d'autres méthodes d'ordonnancement sont possibles.

Un exemple d'une structure possible d'un scénario générique SG est illustré sur la figure 2.

Ainsi, en référence à cette figure 2, le scénario générique SG correspondant comprend trois étapes $E_1$ à $E_3$. L'étape $E_1$ comprend l'action $A_1$ caractérisée par la variable observable $O_1$ et l'action $A_2$ caractérisée par la variable observable $O_2$. L'étape $E_2$ comprend l'action $A_3$ caractérisée par la variable observable $O_3$, l'action $A_4$ caractérisée par les variables observables $O_4$ et $O_5$, et l'action $A_5$ caractérisée par la variable observable $O_6$. L'étape $E_3$ comprend l'action $A_6$ caractérisée par les variables observables $O_7$ et $O_8$ et l'action $A_7$ caractérisée par la variable observable $O_9$.

Selon cet exemple, l'indice k associé aux variables observables $O_k$ varie donc de 1 à 9.

La deuxième unité opérationnelle 22 est apte à fournir un deuxième ensemble de données comprenant une pluralité d'évènements survenus dans l'environnement cible.

Chaque évènement est par exemple détecté par les outils de journalisations correspondants de l'environnement cible et est transmis à la deuxième unité opérationnelle 22 sous un format approprié. Ce format est par exemple Netflow ou Syslog.

La troisième unité opérationnelle 23 est apte à fournir un troisième ensemble de données comprenant une pluralité d'alertes.

Chaque alerte est émise par exemple par le système de détection d'intrusions de l'environnement cible et est transmise à la troisième unité opérationnelle 23 en utilisant l'un des formats connus de description d'alerte, tel que par exemple le format IDMEF.

Chaque alerte présente au moins une valeur observable.

Ainsi, par exemple, chaque alerte peut être représentée sous la forme d'un ensemble fini d'attributs. Chaque attribut se présente sous la forme d'un couple où l'une des composantes correspond à la valeur d'attribut et l'autre, au type d'attribut permettant de renseigner la sémantique de cette valeur. L'un des attributs de l'alerte désigne notamment l'attaque élémentaire dont la détection par le système de détection d'intrusions a conduit à l'émission de cette alerte.

Par exemple, une alerte qui signale une attaque élémentaire par « injection SQL » réalisée par une adresse « 10.0.0.1 » contre un serveur base de données « db.domain.fr » peut être représentée de la manière suivante :

Alerte = [ (source_address, 10.0.0.1), (target_name , db.domain.fr), (attack_action, SQL_injection) ].

Finalement, la base de données 24 est composée d'une pluralité de scénarios génériques spécifiés. Chaque scénario générique spécifié correspond à l'un des scénarios génériques du premier ensemble de données qui a été adapté à l'environnement cible par le système de construction 10 comme cela sera expliqué ci-dessous.

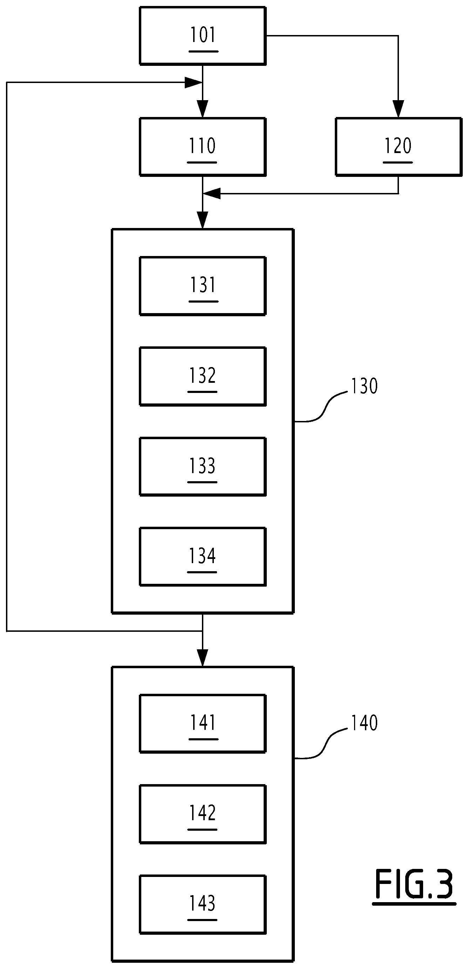

Le procédé de construction de scénarios d'attaques informatiques spécifiques à l'environnement cible, mis en œuvre par le système de construction 10 sera désormais expliqué en référence à la figure 3 présentant un organigramme de ses étapes.

Initialement, la base de données 24 est par exemple vide.

Lors d'une étape initiale 101 du procédé, le module d'acquisition 11 acquiert le premier ensemble de données, le deuxième ensemble de données et le troisième ensemble de données, issus respectivement de la première unité opérationnelle 21, de la deuxième unité opérationnelle 22 et de la troisième unité opérationnelle 23.

Puis, le module d'acquisition 11 transmet l'ensemble des données acquises au module de traitement 12.

Lors d'une première étape 110 du procédé, le module de traitement 12 analyse le premier ensemble de données et le troisième ensemble de données.

En particulier, lors de cette étape 110, le module de traitement 12 détermine un scénario générique SG dont au moins l'une des actions $A_j$ correspond à l'attaque élémentaire causant l'une des alertes du troisième ensemble de données et dans lequel le(s) type(s) du(des) variable(s) observable(s) $O_k$ caractérisant cette action $A_j$ correspond(ent) aux types d'attributs désignés dans cette alerte.

Puis, lors de la même étape 110, le module de traitement 12 associe à la(aux) variable(s) observable(s) $O_k$ de chaque action $A_j$ concernées la(les) valeur(s) observable(s) correspondante(s) des alertes correspondantes.

Le scénario générique SG déterminé lors de cette étape sera désigné par la suite par le terme « scénario générique partiel SGP ».

Lors d'une deuxième étape 120 qui est mise en œuvre par exemple en parallèle avec la première itération de la première étape 110, le module de traitement 12 analyse le deuxième ensemble de données et détermine une pluralité d'anomalies $A_l$. Chaque anomalie $A_l$ correspond à un évènement anormal survenu dans l'environnement cible et présente par exemple une variation de comportement par rapport à une norme établie ou apprise par observation du fonctionnement nominal de l'environnement cible.

Une anomalie correspond par exemple à une attaque informatique inconnue.

En outre, chaque anomalie présente au moins une valeur observable.

Pour mettre en œuvre cette étape 120, le module de traitement 12 applique au deuxième ensemble de données des méthodes d'analyse comportementales afin d'identifier des anomalies de comportement au sens statistique. Ces méthodes d'analyse sont connues en soi et correspondent par exemple aux modèles de classification (« clustering » en anglais) de type K-means, DBScan, ou autres.

Comme il est connu en soi, ces méthodes sont mises en œuvre en utilisant des caractéristiques ou des métriques (« features » en anglais) des données analysées, c'est-à-dire des caractéristiques décrivant les évènements.

Lors d'une troisième étape 130, le module de traitement 12 associe à au moins l'une des variables observables $O_k$ du scénario générique partiel SGP la valeur observable ou l'une des valeurs observables de l'une des anomalies $A_l$ déterminées.

Le module de traitement 12 complète ainsi le scénario générique partiel SGP par des données comportementales définies par les anomalies $A_l$ correspondantes. Cela constitue donc une étape d'hybridation des données comportementales avec les scénarios génériques.

Pour mettre en œuvre cette étape 130, le module de traitement 12 met en œuvre les sous-étapes 131 à 134 pour chaque anomalie $A_l$ déterminée lors de la deuxième étape 120.

En particulier, lors de la sous-étape 131, le module de traitement 12 détermine parmi les variables observables $O_k$ du scénario générique partiel SGP, des variables observables $OD_q$ qui ont été associées à des valeurs observables lors de la première étape 110.

Ces variables observables $OD_q$ seront désignées par la suite par le terme « variables déclenchés ». Leur nombre total p est donc inférieur ou égal au nombre total n des variables observables du scénario SGP.

Les variables déclenchées $OD_q$ sont par exemple ordonnancées selon le même ordre que les variables observables $O_k$. Dans ce cas, l'indice q associé à la référence $OD_q$ varie donc entre 1 et p.

Puis, lors de la sous-étape 132, le module de traitement 12 détermine pour chaque variable déclenchée $OD_q$, une distance $d_q$ entre la valeur observable associée à cette variable déclenchée $OD_q$ et la valeur observable associée à ladite anomalie.

La distance $d_q$ est déterminée en utilisant une fonction de distance ou une métrique adaptée.

Selon un exemple de réalisation, la fonction de distance correspond au nombre de variables observables $O_k$ de l'étape $E_i$ en cours de considération ayant les mêmes types que les valeurs observables de l'anomalie $A_l$ correspondante.

En complément, cette fonction de distance est normalisée, par exemple par le ratio du nombre de ces variables observables $O_k$ par rapport au nombre total de variables observables $O_k$ du scénario SGP.

En complément, il est également possible de donner plus de poids à certaines variables observables $O_k$ plutôt que d'autres.

Par ailleurs, comme dans le cas précédent, l'indice q associé à la référence $d_q$ varie entre 1 et p.

Puis, lors de la sous-étape 133, le module de traitement 12 détermine une distance minimale $d_{min}$ parmi l'ensemble des distances $d_q$ déterminées.

La variable déclenchée $OD_q$ correspondant à cette distance minimale $d_{min}$ sera désignée par la suite par le terme « variable minimale ».

Puis, lors de la sous-étape 134, le module de traitement 12 compare la distance minimale $d_{min}$ avec un seuil d'hybridation prédéterminée et strictement positif, pour décider si la valeur observable et l'une des valeurs observables de l'anomalie $A_l$ peut être associée à l'une des variables observables $O_k$ du scénario générique partiel SGP.

Lorsque cette distance $d_{min}$ est égale à zéro, l'anomalie constatée correspond à l'une des alertes déjà analysée lors de la première étape 110.

Lorsque la distance minimale $d_{min}$ est supérieure au seuil hybridation, l'anomalie constatée se situe trop loin pour être associée à une variable observable du scénario partiel SGP.

Dans ces deux cas, le module de traitement 12 finalise l'exécution de la sous-étape 134 et lance à nouveau la sous-étape 131 pour une nouvelle anomalie $A_l$ si une telle anomalie $A_l$ non analysée existe et sinon, finalise l'exécution de la troisième étape 130 pour le scénario générique partiel SGP en cours de l'analyse.

En revanche, lorsque la distance minimale $d_{min}$ est inférieure ou égale au seuil d'hybridation et est strictement supérieure à zéro, le module de traitement 12 détermine une première distance $D_1$ correspondant à la distance entre la valeur observable ou l'une des valeurs observables associée à ladite anomalie $A_l$ et la valeur observable de la première variable $OD_{q+1}$ déclenchée qui succède la variable minimale $OD_q$.

Puis, le module de traitement 12 détermine une deuxième distance $D_2$ correspondant à la distance entre la valeur observable ou l'une des valeurs observables associée à ladite anomalie $A_l$ et la valeur observable de la première variable déclenchée $OD_{q-1}$ qui précède la variable minimale.

Puis, le module de traitement 12 compare la première distance $D_1$ avec la deuxième distance $D_2$. Si la première distance $D_1$ est inférieure à la deuxième distance $D_2$, le module de traitement 12 associe la valeur observable ou l'une des valeurs observables de ladite anomalie $A_l$ à la première variable observable $O_{k+1}$ qui succède la variable minimale $OD_q$. Dans ce cas, $k+1 < q+1$.

Dans le cas contraire, le module de traitement 12 associe la valeur observable ou l'une des valeurs observables de ladite anomalie $A_l$ à la première variable observable $O_{k-1}$ qui précède la variable minimale $OD_q$. Dans ce cas, $k-1 > q-1$.

Il est à noter que lorsque l'anomalie $A_l$ présente plusieurs valeurs observables, l'expression « l'une des valeurs observables » utilisée lors de la description de cette étape, désigne la valeur observable de l'anomalie $A_l$ qui est de même type que la valeur observable ou la variable observable en combinaison avec laquelle cette expression a été utilisée.

Puis, le module de traitement 12 lance à nouveau la sous-étape 131 pour une nouvelle anomalie $A_l$ si une telle anomalie $A_l$ non analysée existe et sinon, finalise l'exécution de la troisième étape 130 pour le scénario générique partiel SGP en cours de l'analyse.

À la fin de la troisième étape, le module de traitement 12 transmet le scénario générique partiel SGP qui devient alors scénario générique spécifié SGS au module de sortie 13. Puis le module de sortie 13 stocke ce scénario générique spécifié SGS dans la base de données 24.

Puis, le module de traitement 12 réitère la première étape 110 jusqu'à ce qu'il ne soit plus possible de déterminer un nouveau scénario générique partiel parmi les scénarios génériques du premier ensemble de données, la troisième étape étant alors réitérée pour chaque scénario générique partiel SGP déterminé.

Lors d'une quatrième étape 140, le module de traitement 12 fait un enrichissement de la base de signatures de l'environnement cible par une ou plusieurs signatures construites en fonction des scénarios génériques spécifiés SGS.

La construction de chaque signature s'effectue par exemple de manière automatique ou par un opérateur.

En particulier, la quatrième étape 140 comprend pour chaque scénario générique spécifié SGS les sous-étapes 141 à 143 décrites ci-dessous.

Lors de la sous-étape 141, le module de traitement 12 fait une extraction de l'ensemble des caractéristiques de la ou de chaque anomalie $A_l$ dont la valeur observable ou l'une des valeurs observables a été associée à l'une des variables observables $O_k$ dudit scénario générique spécifié SGS lors de la troisième étape 130.

Puis, lors de la sous-étape 142, le module de traitement 12 détermine des caractéristiques utiles parmi l'ensemble des caractéristiques extraites. Chaque caractéristique utile est une caractéristique correspondant à la valeur observable ou à l'une des valeurs observables de l'anomalie $A_l$ correspondante qui a été effectivement associée à l'une des variables observables $O_k$ du scénario générique spécifié SGS. Puis, lors de la sous-étape 143, le module de traitement 12 ou l'opérateur construit une nouvelle signature en fonction des caractéristiques utiles. Cette signature est ensuite transmise à la base de signatures.

Il est à noter que la quatrième étape 140 est exécutée de manière optionnelle.

Selon un exemple avantageux de réalisation de l'invention, le procédé comprend en outre une étape de finalisation exécutée par exemple après l'ensemble des itérations de la troisième étape 130.

Lors de cette étape 130, le module de traitement 12 détermine des anomalies $A_l$ dont la valeur observable ou les valeurs observables n'a(ont) été associée(s) à aucune variable observable $O_k$ d'aucun scénario générique SG.

Ces anomalies sont alors considérées comme des faux positifs qui sont par exemple éliminés de la future considération par le système 10.

On conçoit alors que la présente invention comporte un certain nombre d'avantages.

En particulier, le procédé selon l'invention permet de mettre en œuvre une hybridation complexe entre des méthodes de détection basées sur les scénarios d'attaque connus et celles basées sur la détermination des caractéristiques comportementales.

Cela permet alors de construire des méthodes de détection plus efficaces qui résolvent efficacement les problématiques de « zero-day », tout en diminuant le nombre de fausses alertes par rapport aux méthodes comportementales connues.

De plus, le procédé selon l'invention permet d'enrichir la base de signatures connues en mettant en œuvre une étape d'apprentissage dont le fonctionnement peut être éventuellement influencé par l'opérateur.

**Revendications**

1. Procédé de construction automatique de scénarios d'attaques informatiques spécifiques à un environnement cible à protéger, le procédé comprenant :

   - une étape préliminaire (101) d'acquisition d'un premier ensemble de données, d'un deuxième ensemble de données et d'un troisième ensemble de données ;

      le premier ensemble de données comprenant une pluralité de scénarios génériques (SG), chaque scénario générique (SG) comprenant une pluralité d'actions ($A_j$), chaque action ($A_j$) correspondant à une attaque élémentaire et étant **caractérisée par** une ou plusieurs variables observables ($O_k$) ;
      le deuxième ensemble de données comprenant une pluralité d'évènements survenus dans l'environnement cible ;
      le troisième ensemble de données comprenant une pluralité d'alertes, chaque alerte étant émise par un système de détection d'intrusions dans l'environnement cible suite à une détection d'une attaque élémentaire et étant associée à une ou plusieurs valeurs observables ;

      - une première étape (110) de détermination d'un scénario générique (SG), dit scénario générique partiel (SGP), et d'une ou de plusieurs alertes telles que l'attaque élémentaire ou les attaques élémentaires causant cette ou ces alertes correspondent à l'une ou plusieurs actions ($A_j$), dites actions déclenchées, du scénario générique partiel (SGP), la première étape (110) étant mise en œuvre par analyse du premier et du troisième ensembles de données ;
      la première étape comprenant en outre l'association à la variable observable ($O_k$) ou à l'une des variables observables ($O_k$) de chaque action ($A_j$) déclenchée de la valeur observable ou de l'une des valeurs observables de l'alerte déterminée correspondante ;
      - une deuxième étape (120) d'analyse du deuxième ensemble de données et de détermination d'une pluralité d'anomalies ($A_l$), chaque anomalie ($A_l$) correspondant à un évènement anormal survenu dans l'environnement cible et étant associée à une ou plusieurs valeurs observables ;
      - une troisième étape (130) d'association à au moins l'une des variables observables ($O_k$) du scénario générique partiel (SGP) de la valeur observable ou de l'une des valeurs observables de l'une des anomalies déterminées ($A_l$)

   dans lequel :

      - chaque évènement est décrit par une pluralité de caractéristiques ; et
      - la deuxième étape (120) comprend une analyse statistique des caractéristiques de chaque évènement du deuxième ensemble de données,

   dans lequel chaque alerte du troisième ensemble de données est émise par le système de détection d'intrusion dans l'environnement cible suite à une détection d'une attaque élémentaire par une signature connue issue d'une base de signatures.

2. Procédé selon la revendication 1, dans lequel les variables observables ($O_k$) du scénario générique partiel (SGP) sont ordonnancées selon un ordre prédéterminé et la troisième étape (130) comprend pour chaque anomalie déterminée ($A_l$) lors de la deuxième étape (120), les sous-étapes suivantes :

- détermination (131) parmi les variables observables ($O_k$) du scénario générique partiel (SGP), des variables observables, dits variables déclenchés ($OD_q$), associées à des valeurs observables ;
- pour chaque variable déclenchée ($OD_q$), détermination (132) d'une distance ($d_q$) entre la valeur observable associée à cette variable déclenchée ($OD_q$) et la valeur observable ou l'une des valeurs observables associée à ladite anomalie ($A_l$) ;
- détermination (133) d'une distance minimale ($d_{min}$) parmi l'ensemble des distances ($d_q$) déterminées, la variable déclenchée ($OD_q$) correspondant à cette distance minimale ($d_{min}$) étant dite variable minimale ;
- lorsque la distance minimale ($d_{min}$) est inférieure à un seuil d'hybridation prédéterminée et est strictement supérieure à zéro :

+ détermination (134) d'une première distance ($D_1$) correspondant à la distance entre la valeur observable ou l'une des valeurs observables de ladite anomalie ($A_l$) et la valeur observable de la première variable déclenchée ($OD_{q+1}$) qui succède la variable minimale ($OD_q$) ;
+ détermination (134) d'une deuxième distance ($D_2$) correspondant à la distance entre la valeur observable ou l'une des valeurs observables associée à ladite anomalie ($A_l$) et la valeur observable de la première variable déclenchée ($OD_{q-1}$) qui précède la variable minimale ($OD_q$) ;
+ si la première distance ($D_1$) est inférieure à la deuxième distance ($D_2$), association (134) de la valeur observable ou de l'une des valeurs observables de ladite anomalie ($A_l$) à la première variable observable ($O_{k+1}$) qui succède la variable minimale ($OD_q$), dans le cas contraire, association (134) de la valeur observable de ladite anomalie ($A_l$) à la première variable observable ($O_{k-1}$) qui précède la variable minimale ($OD_q$).

3. Procédé selon la revendication 1 ou 2, dans laquelle la première étape (110) est réitérée jusqu'à ce qu'il ne soit plus possible de déterminer un nouveau scénario générique partiel (SGP) parmi les scénarios génériques du premier ensemble de données, la troisième étape (130) étant alors réitérée pour chaque scénario générique partiel déterminé.

4. Procédé selon l'une quelconque des revendications précédentes, dans lequel :

- chaque variable observable ($O_k$) de chaque scénario générique (SG) est associée à un type ;
- la ou chaque valeur observable de chaque alerte est associée à un type ; et
- lors de la deuxième étape (120), le type de la ou de chaque variable observable ($O_k$) du scénario générique partiel (SGP) correspondant est identique au type de la valeur observable associée à cette variable observable ($O_k$) lors de cette étape (120).

5. Procédé selon l'une quelconque des revendications précédentes, dans lequel le ou chaque scénario générique partiel (SGP) dont au moins l'une des variables observables ($O_k$) a été associée à une valeur observable lors de la troisième étape (130), est dit scénario générique spécifié (SGS) ;
le procédé comprenant en outre une quatrième étape (140) d'enrichissement de la base de signatures par une ou plusieurs signatures construites en fonction du ou de chaque scénario générique spécifié (SGS).

6. Procédé selon la revendication 5, dans lequel la construction de la ou de chaque signature s'effectue de manière automatique ou par un opérateur.

7. Procédé selon la revendication 5 ou 6, dans lequel la quatrième étape (140) comprend pour chaque scénario générique spécifié (SGS) les sous-étapes suivantes :

- extraction (141) de l'ensemble des caractéristiques de la ou de chaque anomalie ($A_l$) dont la valeur observable ou l'une des valeurs observables est associée à l'une des variables observables ($O_k$) dudit scénario générique spécifié (SGS) lors de la troisième étape (130) ;
- détermination (142) des caractéristiques utiles parmi l'ensemble des caractéristiques extraites, chaque caractéristique utile étant une caractéristique correspondant à la valeur observable ou à l'une des valeurs observables de l'anomalie ($A_l$) correspondante associée à l'une des variables observables ($O_k$) du scénario générique spécifié (SGS) ;
- construction (143) d'une nouvelle signature en fonction des caractéristiques utiles.

8. Produit programme d'ordinateur comportant des instructions logicielles qui, lorsque mises en œuvre par un équipement informatique, mettent en œuvre le procédé selon l'une quelconque des revendications précédentes.

9. Système de construction automatique de scénarios d'attaques informatiques, comportant des moyens techniques configurés pour mettre en œuvre le procédé selon l'une quelconque des revendications 1 à 7.

**Patentansprüche**

1. Verfahren zur automatischen Konstruktion von Computerangriffsszenarien, die für eine zu schützende Zielumgebung spezifisch sind, wobei das Verfahren umfasst:

   - einen vorbereitenden Schritt (101) des Erfassens eines ersten Datensatzes, eines zweiten Datensatzes und eines dritten Datensatzes;

      wobei der erste Datensatz eine Vielzahl generischer Szenarien (SG) umfasst, wobei jedes generische Szenario (SG) eine Vielzahl von Aktionen ($A_j$) umfasst, wobei jede Aktion ($A_j$) einem elementaren Angriff entspricht und durch eine oder mehrere beobachtbare Variablen ($O_k$) gekennzeichnet ist;
      wobei der zweite Datensatz eine Vielzahl von Ereignissen umfasst, die in der Zielumgebung aufgetreten sind;
      wobei der dritte Datensatz eine Vielzahl von Warnungen umfasst, wobei jede Warnung von einem System zur Erkennung von Intrusionen in die Zielumgebung nach einer Erkennung eines elementaren Angriffs ausgegeben wird und einem oder mehreren beobachtbaren Werten zugeordnet ist;

   - einen ersten Schritt (110) des Bestimmens eines generischen Szenarios (SG), bezeichnet als generisches Teilszenario (SGP), und einer oder mehrerer Warnungen, so dass der elementare Angriff oder die elementaren Angriffe, die diese Warnung oder diese Warnungen verursachen, einer oder mehreren Aktionen ($A_j$), bezeichnet als ausgelöste Aktionen, des generischen Teilszenarios (SGP) entsprechen, wobei der erste Schritt (110) durch Analyse des ersten und des dritten Datensatzes durchgeführt wird;
      wobei der erste Schritt ferner die Zuordnung des beobachtbaren Werts oder eines der beobachtbaren Werte der entsprechenden ermittelten Warnung zu der beobachtbaren Variablen ($O_k$) oder zu einer der beobachtbaren Variablen ($O_k$) jeder ausgelösten Aktion ($A_j$) umfasst;
   - einen zweiten Schritt (120) des Analysierens des zweiten Datensatzes und des Bestimmens einer Vielzahl von Anomalien ($A_l$), wobei jede Anomalie ($A_l$) einem anormalen Ereignis entspricht, das in der Zielumgebung aufgetreten ist, und einem oder mehreren beobachtbaren Werten zugeordnet ist;
   - einen dritten Schritt (130) des Zuordnens des beobachtbaren Werts oder eines der beobachtbaren Werte einer der ermittelten Anomalien ($A_l$) zu mindestens einer der beobachtbaren Variablen ($O_k$) des partiellen generischen Szenarios (SGP)

   wobei:

      - jedes Ereignis durch eine Vielzahl von Merkmalen beschrieben wird; und
      - der zweite Schritt (120) eine statistische Analyse der Merkmale jedes Ereignisses des zweiten Datensatzes umfasst,

   wobei jede Warnung des dritten Datensatzes von dem System zur Erkennung von Intrusionen in die Zielumgebung nach einer Erkennung eines elementaren Angriffs durch eine bekannte Signatur aus einer Signaturdatenbank ausgegeben wird.

2. Verfahren nach Anspruch 1, wobei die beobachtbaren Variablen ($O_k$) des generischen Teilszenarios (SGP) in einer vorbestimmten Reihenfolge freigegeben werden und der dritte Schritt (130) für jede im zweiten Schritt (120) ermittelte Anomalie ($A_l$) die folgenden Teilschritte umfasst:

      - Bestimmen (131), aus den beobachtbaren Variablen ($O_k$) des partiellen generischen Szenarios (SGP), der beobachtbaren Variablen, bezeichnet als ausgelöste Variablen ($OD_q$), die beobachtbaren Werten zugeordnet sind;
      - Bestimmen (132), für jede ausgelöste Variable ($OD_q$), eines Abstands ($d_q$) zwischen dem dieser ausgelösten Variablen ($OD_q$) zugeordneten beobachtbaren Wert und dem beobachtbaren Wert oder einem der beobachtbaren Werte, die der Anomalie ($A_l$) zugeordnet sind;
      - Bestimmen (133) eines Mindestabstands ($d_{min}$) aus der Gesamtheit der bestimmten Abstände ($d_q$), wobei die ausgelöste Variable ($OD_q$), die diesem Mindestabstand ($d_{min}$) entspricht, als minimale Variable bezeichnet wird;

- wenn der Mindestabstand ($d_{min}$) unter einem vorbestimmten Hybridisierungsschwellenwert liegt und strikt größer als null ist:

+Bestimmen (134) eines ersten Abstands ($D_1$), der dem Abstand zwischen dem beobachtbaren Wert oder einem der beobachtbaren Werte der Anomalie ($A_l$) und dem beobachtbaren Wert der ersten ausgelösten Variablen ($OD_{q+1}$) entspricht, die der minimalen Variablen ($OD_q$) folgt;

+Bestimmen (134) eines zweiten Abstands ($D_2$), der dem Abstand zwischen dem beobachtbaren Wert oder einem der beobachtbaren Werte, der der Anomalie ($A_l$) zugeordnet ist, und dem beobachtbaren Wert der ersten ausgelösten Variablen ($OD_{q-1}$) entspricht, die der minimalen Variablen ($OD_q$) vorausgeht;

+wenn der erste Abstand ($D_1$) kleiner als der zweite Abstand ($D_2$) ist, Zuordnen (134) des beobachtbaren Werts oder eines der beobachtbaren Werte der Anomalie ($A_l$) zu der ersten beobachtbaren Variablen ($O_{k+1}$), die der minimalen Variablen ($OD_q$) folgt, andernfalls Zuordnen (134) des beobachtbaren Werts der Anomalie ($A_l$) zu der ersten beobachtbaren Variablen ($O_{k-1}$), die der minimalen Variablen ($OD_q$) vorausgeht.

3. Verfahren nach Anspruch 1 oder 2, wobei der erste Schritt (110) so lange wiederholt wird, bis es nicht mehr möglich ist, ein neues generisches Teilszenario (SGP) aus den generischen Szenarien des ersten Datensatzes zu bestimmen, wobei der dritte Schritt (130) dann für jedes bestimmte generische Teilszenario wiederholt wird.

4. Verfahren nach einem der vorherigen Ansprüche, wobei:

- jede beobachtbare Variable ($O_k$) jedes generischen Szenarios (SG) einem Typ zugeordnet ist;
- der oder jeder beobachtbare Wert jeder Warnung einem Typ zugeordnet ist ; und
- im zweiten Schritt (120) der Typ der oder jeder beobachtbaren Variablen ($O_k$) des entsprechenden generischen Teilszenarios (SGP) mit dem Typ des beobachtbaren Werts, der dieser beobachtbaren Variablen ($O_k$) in diesem Schritt (120) zugeordnet ist, identisch ist.

5. Verfahren nach einem der vorherigen Ansprüche, wobei das oder jedes generische Teilszenario (SGP), bei dem mindestens eine der beobachtbaren Variablen ($O_k$) im dritten Schritt (130) einem beobachtbaren Wert zugeordnet wurde, als spezifiziertes generisches Szenario (SGS) bezeichnet wird;

6. wobei das Verfahren ferner einen vierten Schritt (140) des Anreicherns der Signaturdatenbank mit einer oder mehreren, in Abhängigkeit von dem oder jedem spezifizierten generischen Szenario (SGS) konstruierten Signaturen umfasst.

7. Verfahren nach Anspruch 5, wobei die Konstruktion der oder jeder Signatur automatisch oder durch einen Bediener erfolgt.

- Verfahren nach Anspruch 5 oder 6, wobei der vierte Schritt (140) für jedes spezifizierte generische Szenario (SGS) die folgenden Teilschritte umfasst:
- Extrahieren (141) der gesamten Merkmale der oder jeder Anomalie ($A_l$), deren beobachtbarer Wert oder einer der beobachtbaren Werte einer der beobachtbaren Variablen ($O_k$) des spezifizierten generischen Szenarios (SGS) im dritten Schritt (130) zugeordnet ist;
- Bestimmen (142) der nützlichen Merkmale aus der Gesamtheit der extrahierten Merkmale, wobei jedes nützliche Merkmal ein Merkmal ist, das einem beobachtbaren Wert oder einem der beobachtbaren Werte der entsprechenden Anomalie ($A_l$) entspricht, die einer der beobachtbaren Variablen ($O_k$) des spezifizierten generischen Szenarios (SGS) zugeordnet ist;
- Konstruieren (143) einer neuen Signatur in Abhängigkeit von den nützlichen Merkmalen.

8. Computerprogrammprodukt, das Softwareanweisungen aufweist, die, wenn sie von einer Rechenvorrichtung ausgeführt werden, das Verfahren nach einem der vorherigen Ansprüche durchführen.

9. System zur automatischen Konstruktion von Computerangriffsszenarien, das technische Mittel aufweist, die zur Durchführung des Verfahrens nach einem der Ansprüche 1 bis 7 ausgelegt sind.

**Claims**

1. A method for automatically constructing computer attack scenarios specific to a target environment to be protected, the method comprising:

- a preliminary step (101) of acquiring a first set of data, a second set of data and a third set of data;

the first set of data comprising a plurality of generic scenarios (SG), each generic scenario (SG) comprising a plurality of actions ($A_j$), each action ($A_j$) corresponding to an elementary attack and **characterised by** one or more observable variables ($O_k$);
the second set of data comprising a plurality of events occurring in the target environment;
the third set of data comprising a plurality of alerts, each alert being issued by an intrusion detection system in the target environment following detection of an elementary attack and being associated with one or more observable values;

- a first step (110) of determining a generic scenario (SG), called a partial generic scenario (SGP), and one or more alerts such that the elementary attack or elementary attacks causing this or these alerts correspond to one or more actions ($A_j$), called triggered actions, of the partial generic scenario (SGP), the first step (110) being implemented by analysing the first and third sets of data;
the first step further comprising associating with the observable variable ($O_k$) or one of the observable variables ($O_k$) of each triggered action ($A_j$) the observable value or one of the observable values of the corresponding determined alert;
- a second step (120) of analysing the second set of data and determining a plurality of anomalies ($A_l$), each anomaly ($A_l$) corresponding to an abnormal event occurring in the target environment and being associated with one or more observable values;
- a third step (130) of associating at least one of the observable variables ($O_k$) of the partial generic scenario (SGP) with the observable value or one of the observable values of one of the determined anomalies ($A_l$)

wherein:

- each event is described by a plurality of characteristics; and
- the second step (120) comprises a statistical analysis of the characteristics of each event in the second set of data,

in which each alert in the third set of data is issued by the intrusion detection system in the target environment following detection of an elementary attack by a known signature in a signature database.

2. A method according to claim 1, in which the observable variables ($O_k$) of the partial generic scenario (SGP) are ordered according to a predetermined order and the third step (130) comprises, for each anomaly determined ($A_j$) in the second step (120), the following sub-steps:

- determination (131), among the observable variables ($O_k$) of the partial generic scenario (SGP), of observable variables, known as triggered variables ($OD_q$), associated with observable values;
- for each triggered variable ($OD_q$), determination (132) of a distance ($d_q$) between the observable value associated with this triggered variable ($OD_q$) and the value or one of the values associated with the said anomaly ($A_l$);
- determination (133) of a minimum distance ($d_{min}$) from the set of determined distances ($d_q$), the triggered variable ($OD_q$) corresponding to this minimum distance ($d_{min}$) being referred to as the minimum variable;
- when the minimum distance ($d_{min}$) is less than a predetermined hybridisation threshold and strictly greater than zero:

+determination (134) of a first distance ($D_1$) corresponding to the distance between the observable value or one of the observable values of said anomaly ($A_l$) and the observable value of the first triggered variable ($OD_{q+1}$) that follows the minimum variable ($OD_q$);
+determination (134) of a second distance ($D2$) corresponding to the distance between the observable value or one of the observable values associated with said anomaly ($A_l$) and the observable value of the first triggered variable ($OD_{q-1}$) which precedes the minimum variable ($OD_q$);
+if the first distance ($D_1$) is less than the second distance ($D_2$), association (134) of the observable value or one of the observable values of said anomaly ($A_l$) with the first observable variable ($O_{k+1}$) that follows the minimum variable ($OD_q$), otherwise, association (134) of the observable value of said anomaly ($A_l$) with the first observable variable ($O_{k-1}$) preceding the minimum variable ($OD_q$).

3. A method according to claim 1 or 2, in which the first step (110) is repeated until it is no longer possible to determine a new partial generic scenario (SGP) from among the generic scenarios of the first set of data, the third step (130) then being repeated for each partial generic scenario determined.

4. A method according to one of the preceding claims, wherein:

   - each observable variable ($O_k$) of each generic scenario (SG) is associated with a type;
   - where each observable value of each alert is associated with a type; and
   - in the second step (120), the type of the or each observable variable ($O_k$) of the corresponding partial generic scenario (SGP) is identical to the type of the observable value associated with this observable variable ($O_k$) in this step (120).

5. A method according to any one of the preceding claims, in which the or each partial generic scenario (SGP) of which at least one of the observable variables ($O_k$) has been associated with an observable value during the third step (130), is referred to as a specified generic scenario (SGS);

6. the method further comprising a fourth step (140) of enriching the signature base with one or more signatures constructed as a function of the or each specified generic scenario (SGS).

7. A method according to claim 5, wherein the construction of the signature or of each signature is carried out automatically or by an operator.

   - A method according to claim 5 or 6, wherein the fourth step (140) comprises for each specified generic scenario (SGS) the following sub-steps:
   - extraction (141) of the set of characteristics of the or each anomaly ($A_i$) whose observable value or one of the observable values is associated with one of the observable variables ($O_k$) of the said specified generic scenario (SGS) in the third step (130);
   - determination (142) of the useful characteristics from the set of extracted characteristics, each useful characteristic being one that corresponds to the observable value or one of the observable values of the corresponding anomaly ($A_i$) associated with one of the observable variables ($O_k$) of the specified generic scenario (SGS);
   - construction (143) of a new signature based on the useful characteristics.

8. A computer program product comprising software instructions, which, when carried out by a computing device, implement the method according to any one of the preceding claims.

9. System for automatically constructing computer attack scenarios, comprising technical means configured to implement the method according to any one of claims 1 to 7.

$$\underline{\text{FIG.1}}$$

$$\underline{\text{FIG.2}}$$

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- A hybrid and learning agent architecture for network intrusion detection. **LEITE ADRIANA et al.** JOURNAL OF SYSTEMS & SOFTWARE. ELSEVIER NORTH HOLLAND

- **MAHEYZAH MD SIRAJ et al.** Toward Predictive Real-time Multi-sensors Intrusion Alert Correlation Framework. *INDIAN JOURNAL OF SCIENCE & TECHNOLOGY*, 30 June 2015, vol. 8 (12)